# EUROPEAN PATENT SPECIFICATION

(11) **EP 3 426 849 B1**
(45) Date of publication and mention of the grant of the patent: **14.06.2023**
(21) Application number: 17713103.4
(22) Date of filing: 08.03.2017
(51) Int. Cl.: E02D 31/00, F16N 31/00

(54) **SOIL PROTECTION**
BODENSCHUTZ
PROTECTION D'UN SOL

(30) Priority: 09.03.2016 US 201662305668 P
(43) Date of publication of application: 16.01.2019
(73) Proprietor: NEW PIG CORPORATION, Tipton, PA 16684-0304 (US)
(72) Inventor: STROUP, Justin L., Altoona, Pennsylvania 16602 (US); DIMINICK, Anthony Scott, Hollidaysburg, Pennsylvania 16648 (US); JACKSON, Dane R., Port Matilda, Pennsylvania 16870 (US); SILVER, Daniel A., State College, Pennsylvania 16801 (US)
(74) Representative: Serjeants LLP
(86) International application number: PCT/US2017/021344
(87) International publication number: WO 2017/156117

(56) References cited:
- US-A- 5 762 233
- US-A1- 2007 207 306
- US-A1- 2011 174 813
- US-A1- 2014 256 533
- US-A1- 2016 194 849
- US-B1- 6 648 008

## Description

### FIELD OF THE INVENTION

The present invention relates to compressible containment berm devices, and more particularly relates to drive-over berm devices for containing leaks and spills that are self-adhering to ground, pavement and floor surfaces, and which can be removed and placed in other locations for reuse.

### BACKGROUND INFORMATION

Berm devices such as generally known from the document US 2007/207306 A1 have conventionally been used to contain leaks, spills and other liquids. An example of a buildable berm system is disclosed in U.S. Patent No. 5,820,297. An example of a foldable, portable containment is disclosed is U.S. Patent No. 5,762,233.

### SUMMARY OF THE INVENTION

The present invention provides a compressible liquid impermeable containment wall according to claim 1.

The present invention provides a self adhering compressible containment berm device that self-adheres to surfaces such as ground, pavement and floors, and which can be easily removed or repositioned after use leaving little or no adhesive residue.

A further aspect of the present invention is to provide a method of assembling a containment berm device on a containment surface according to claim 15.

These and other aspects of the present invention will be more apparent from the following description.

### BRIEF DESCRIPTION OF THE DRAWINGS

Fig. 1 is an isometric view of a self-adhering compressible containment berm device installed on a containment surface in accordance with an embodiment of the present invention.
Fig. 2 is a partially schematic cross-sectional view of a self-adhering compressible containment wall for use in a berm device in accordance with an embodiment of the present invention.
Fig. 3 is a partially schematic cross-sectional view of the self-adhering compressible containment wall of Fig. 2 prior to installation, including a release film layer covering a pre-applied adhesive layer on the bottom of the containment wall in accordance with an embodiment of the present invention.
Fig. 4 is a partially schematic cross-sectional view of a self-adhering compressible containment wall for use in a berm device in accordance with another embodiment of the present invention.
Fig. 5 is a partially schematic cross-sectional view of a self-adhering compressible containment wall for use in a berm device in accordance with a further embodiment of the present invention.
Fig. 6 is a partially schematic cross-sectional view of a self-adhering compressible containment wall for use in a berm device in accordance with another embodiment of the present invention.

### DETAILED DESCRIPTION

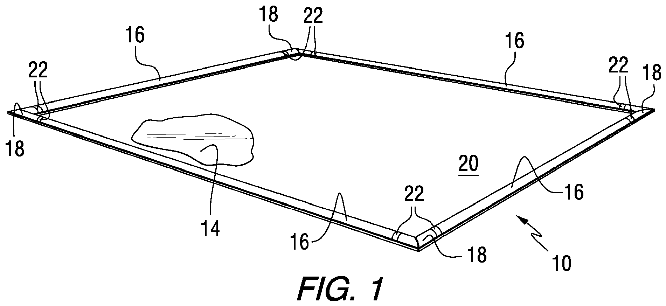

Fig. 1 shows a berm device 10 in accordance with an embodiment of the present invention. The berm device 10 includes multiple compressible liquid impermeable containment walls 16 connected together to form a liquid containment area in which a spill 14, leak, or other liquid is prevented from escaping. The compressible containment walls 16 are connected by corner joints 18 to thereby form a closed perimeter of the berm device 10. The compressible containment walls 16 and corner joints 18 are directly mounted on a containment surface 20 such as the ground, pavement, floor or the like. Connecting straps 22 may be used to connect the compressible containment walls 16 and the corner joints 18.

As shown in Fig. 1, the berm device 10 can be formed in the shape of a rectangle surrounding the spill 14. In this arrangement, the berm device 10 includes four sections of compressible containment walls 16 which define the four sides of the rectangular berm device 10. The corner joints 18 may be provided in right-angle configurations as shown. Alternatively, the corner joints 18 can be provided in other configurations to provide a triangular-shaped berm, a pentagonal-shaped berm, or other multiple-sided berm. The corner joints 18 can also be configured to provide a berm device 10 in the shape of a parallelogram, octagon or other geometric configuration.

The berm device 10 has a liquid containment height corresponding to the expanded height of the compressible containment walls 16. In certain embodiments, the compressible containment walls have a typical expanded height of from 1.3 to 45.7 cm (0.5 to 18 inches), for example, from 2.5 to 38.1 cm (1 to 15 inches), or from 5.1 to 30.5 cm (2 to 12 inches). When the compressible containment walls 16 are compressed, e.g., when a vehicle passes over the containment wall(s), the compressed height of the compressible containment walls 16 may typically range from 0.2 to 30.5 cm (0.1 to 12 inches), for example, from 0.4 to 25.4 cm (0.15 to 10 inches), or from 0.5 to 20.3 cm (0.2 to 8 inches). In certain embodiments, the compressed height is from 5 or 10 to 70 percent of the expanded height of the compressible containment wall 16, for example, from 15 or 20 to 60 percent, or from 22 or 25 to 50 percent.

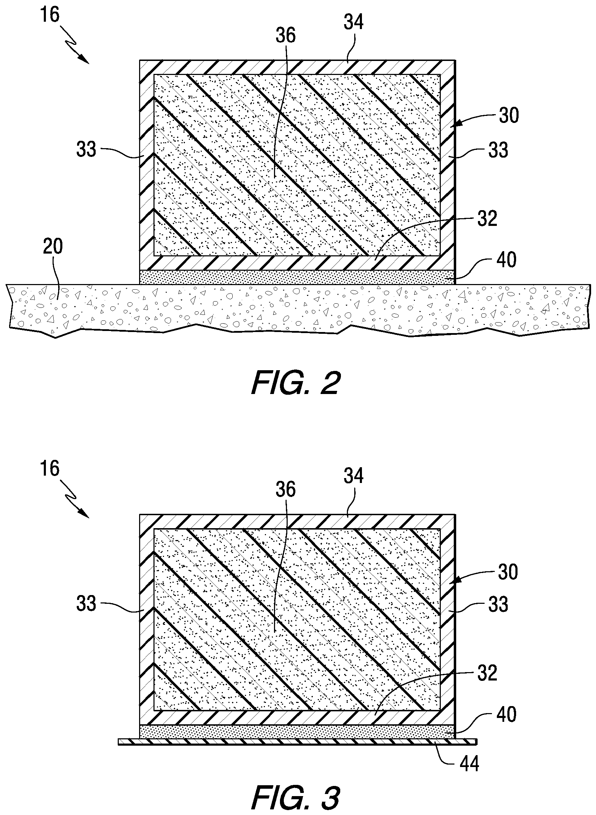

Figs. 2-6 are cross-sectional views of compressible containment walls 16 in accordance with embodiments of the present invention. In the embodiment shown in Figs. 2 and 3, the compressible containment wall 16 includes a flexible shell 30 having a bottom shell layer 32, sidewalls 33 and a top shell layer 34. A compressible filling material 36 is provided inside the flexible shell 30. The flexible shell 30 is made of at least one layer of a liquid impermeable, durable material. Although the flexible shell 30 is shown as a continuous layer of material in Figs. 2 and 3, it has to be understood that the flexible shell 30 may be made from multiple panels of flexible, liquid impermeable material that are connected together by any suitable means including adhesives, welding, sewing, and the like.

As further shown in Figs. 2 and 3, a pre-applied adhesive layer 40 is located on the exterior surface of the bottom shell layer 32. As used herein, the term "pre-applied adhesive" means an adhesive layer that is applied to the bottom shell layer 32 during an initial manufacturing or assembly process, rather than being applied separately at an installation site. As more fully described below, the pre-applied adhesive layer 40 helps to secure and seal the bottom shell layer 32 to the containment surface 20 to thereby reduce or eliminate the flow of spills, leaks or other liquids underneath the compressible containment walls 16.

As shown in Fig. 3, during manufacture of the compressible containment walls 16, a release liner or film 44 may be applied to the bottom surface of the adhesive layer 40 in order to cover the adhesive layer until the compressible containment walls 16 is installed at a containment site. The release liner 44 may comprise a thin flexible sheet of material including polymers such as polypropylene, polyethylene and/or polyester, wax and/or silicone coated paper, or the like.

In certain embodiments, the thickness of the bottom shell layer 32, sidewalls 33 and top shell layer 34 of the flexible shell 30 may typically range from 0.025 to 12.7 mm

(0.001 to 0.5 inch), for example, from 0.13 to 5.1 mm (0.005 to 0.2 inch), or from 0.25 to 2.5 mm (0.01 to 0.1 inch). In a particular embodiment, the thickness may be about 0.64 mm (0.025 inch).

The flexible shell 30 may be made from any suitable liquid impermeable material such as vinyl, polyurethane, polyols, extruded plastic materials and the like. If made from vinyl or other similar polymeric materials, the flexible shell 30 may typically have a basis weight of from 339-1695 g/m² (10 to 50 oz/yd²), for example, from 508-1017 g/m² (15 to 30 oz/yd²), or about 610 g/m² (18 oz/yd²). In certain embodiments, the flexible polymeric sheet material of the flexible shell 30 may be reinforced with at least one layer of reinforcing material, such as scrim cloth, woven fabric, non-woven fabric, fibers, or the like.

The compressible fill material 36 may comprise a resilient highly compressible material such as an open-cell foam or closed-cell foam, for example, synthetic rubber, polyolefin or polyurethane open cell foam. The compressible material allows the berm to temporarily collapse as equipment is wheeled into the containment area and to return to its original height once the compression force is removed. Open-celled foam is advantages over closed-cell foam since it is easier to collapse. Alternately, other resilient compressible materials can be used, such as polymer or metal springs, synthetic fibers or an air bladder. However, any suitable flexible, pliable material can be used as the filler including cellulose, and synthetic or mineral materials. The compressible fill material 36 may have a shape retention property such that, when compression is released, the compressible fill material returns to generally its original shape. In certain embodiments, the compressible fill material 36 may have an expanded height of from 1.3 to 40.64 cm (0.5 to 16 inches), and a compressed height of from 0.25 to 20.3 or 25.4 cm (0.1 to 8 or 10 inches).

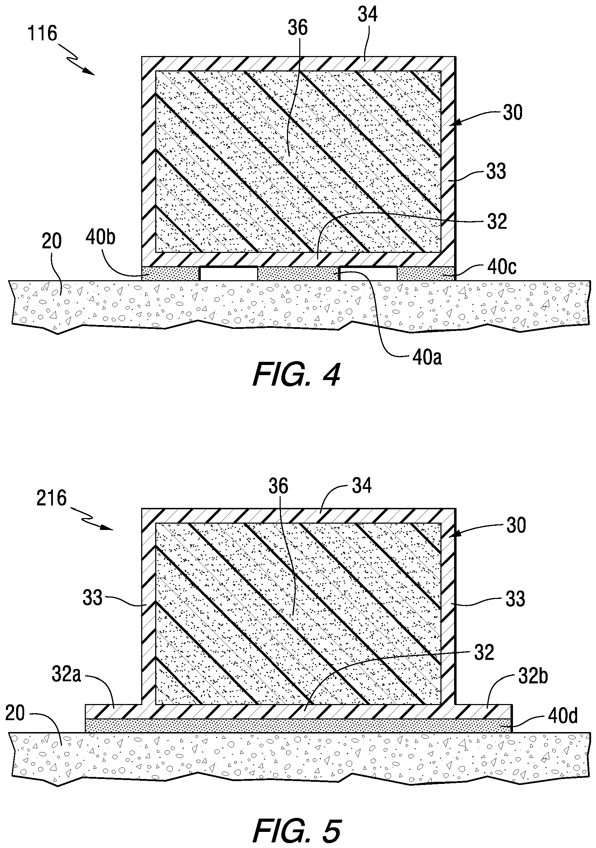

Fig. 4 illustrates a compressible containment wall 116 in accordance with another embodiment of the present invention. This embodiment is similar to that shown in Figs. 2 and 3, with the exception that the adhesive layer does not form a continuous sheet across the entire bottom surface of the bottom shell layer 32, but rather comprises a central adhesive strip 40a, and two separate side adhesive strips 40b and 40c.

Fig. 5 illustrates a compressible containment wall 216 in accordance another embodiment of the present invention. In this embodiment, the bottom shell layer 32 is extended laterally to form extended bottom strips 32a and 32b on either side of the compressible containment wall 216. In this embodiment, an extended adhesive layer 40d is provided across the entire bottom surface area of the bottom shell layer 32, including the extended bottom strips 32a in and 32b. Alternatively, the adhesive layer maybe provided as discontinuous strips, similar to those shown in the embodiment of Fig. 4.

In certain embodiments the pre-applied adhesive layer 40 may be a pressure sensitive adhesive (PSA). The adhesive, for example, may be natural rubber-based, synthetic rubber-based, acrylic-based, or the like. The pre-applied adhesive layer 40 may comprise a cross-linked type PSA that has good chemical resistance. The PSA may be applied directly onto the bottom surface of the bottom shell layer 32, or may be applied to a carrier film (not shown) that is then attached to the bottom shell layer 32. Suitable carrier films may be made of polypropylene, polyethylene, polyester, nylon, or the like.

The PSA may have a peel value of from 1.4 to 222 N (5 to 800 ounces force), for example from 11 to 63 N (40 to 225 ounces force), wherein the peel value is measured per the Pressure Sensitive Tape Council test method #PSTC 101. Alternatively the PSA can be a permanent type with a peel force of greater than 63 N (225 ounces force) for applications that do not require relocation of the berm.

In certain embodiments, the thickness of the pre-applied adhesive layer 40 may typically range from 0.013 to 6.4 mm (0.0005 to 0.25 inch), for example, from 0.02 to 3.8 mm (0.0008 to 0.15 inch), or from 0.025 to 2.5 mm (0.001 to 0.1 inch). In a particular embodiment, the thickness may be about 0.038 mm (0.0015 inch).

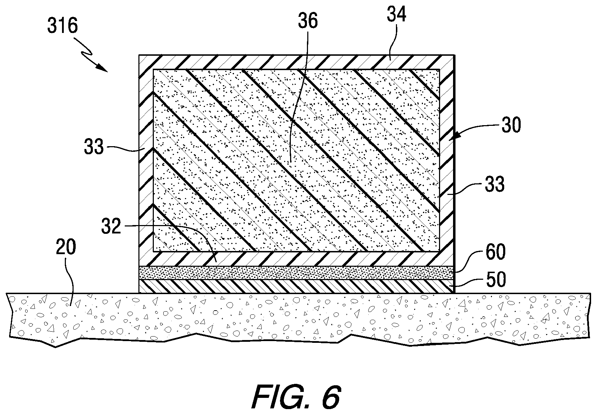

Fig. 6 illustrates a compressible containment wall 316 in accordance with another embodiment of the present invention. In this embodiment, the lower most layer of the compressible containment wall 316 comprises an adhesive sealing layer 50 made of a pliable, tacky material, as more fully described below. A low-density bonding layer 60 is provided between the bottom shell layer 32 and the pliable, tacky adhesive sealing layer 50. As used herein, the term "low-density bonding layer" means a deep pile or lofty material having at least one surface comprising entanglement fibers that extend from the layer to provide additional surface area and attachment sites for the adjacent bottom shell layer 32 and/or adhesive sealing layer 50. In certain embodiments, a portion of the adhesive sealing layer 50 may be at least partially impregnated into the low-density, bonding layer 60. For example, the pliable, tacky material of the adhesive sealing layer 50 may be embedded into the low-density bonding layers a distance of from 1 to 50 or 75 percent of the thickness of the low-density bonding layer 60, for example, from 3 or 5 to 30 or 40 percent. As more fully described below, the low-density bonding layer 60 helps to secure the adhesive sealing layer 50 to the bottom shell layer 32 during removal and repositioning of the compressible containment walls 16.

In certain embodiments, the thickness of the pliable, tacky adhesive sealing layer 50 may typically range from 0.025 to 5.1 cm (0.01 to 2 inch), for example, from 0.13 to 1.3 cm (0.05 to 0.5 inch), or from 0.25 to 0.64 cm (0.1 to 0.25 inch). In a particular embodiment, the thickness may be about 0.32 cm (0.125 inch).

In certain embodiments, the thickness of the low-density bonding layer 60 may typically range from 0.025 to 0.25 cm (0.01 to 0.1 inch), for example, from 0.038 to 0.20 cm (0.015 to 0.08 inch), or from 0.76 to 0.15 cm (0.03 to 0.06 inch). In a particular embodiment, the thickness may be about 0.10 cm (0.04 inch).

The adhesive sealing layer 50 is a pliable, tacky layer that is flexible and tacky in order to conform to irregularities or roughness in the containment surface 20 and adheres to the surface to thereby provide a seal which reduces or eliminates the flow of spilled liquids. The adhesive sealing layer 50 may comprise materials such as urethane, polyurethane, polyvinyl chloride and/or silicone. The adhesive sealing layer 50 may have a hardness, as measured by a durometer, at least 10 percent less than the hardness of the bottom shell layer 32. In one embodiment, the adhesive sealing layer 50 serves to keep the berm device 10 in its desired location due to its tacky surface. The adhesive sealing layer 50 can comprise an inherently tacky material or can have a standard tackifier applied to any exposed surface. The adhesive sealing layer 50 has a tackiness such that it adheres to the containment surface 20. In one embodiment, the adhesive sealing layer 50 has sufficient tackiness such that the sealing layer adheres when pressed against a vertical wall. The tackiness of the adhesive sealing layer 50 may also be measured by other test methods known to those skilled in the art, such as rolling ball, peel and probe tests.

In certain embodiments, the adhesive layer 50 may consist of a tacky soft polyurethane with maximum durometer of 40 (Shore 00 scale), for example, from 5 to 40, or from 10 to 20, and may have a minimum coating thickness of 0.13 mm up to 2.5 cm (0.005 inches up to 1 inch), for example, from 0.025 to 1.9 cm (0.01 to 0.75 inch), or from 0.13 or 0.25 to 1.27 cm (0.05 or 0.1 to 0.5 inch). The low durometer of the soft tacky polyurethane allows it to flow into and fill the cracks and crevices of the surface it is applied to. This is particularly important on rough surfaces, such as macadam, for forming a fluid tight seal between the berm device and the rough containment surface. Thicker coating levels and lower durometer polyurethanes may be preferred since thicker coatings have more polyurethane available to flow into the cracks and crevices while lower durometer polyurethanes flow easily into the voids.

Since tacky soft urethanes may not adhere strongly to polymer materials used for the bottom shell layer shell 32, the low-density bonding layer 60 may be used to achieve a satisfactory bond. Examples of such low-density bonding layers are described in U.S. Patent No. 8,117,686.

In one embodiment, a mixture of various polyurethanes can be used to make the adhesive sealing layer 50. A typical polyurethane mixture comprises from about 50 to about 90 weight percent polyol, and from about 10 to about 50 weight percent isocyanate prepolymer. The liquid polyurethane is mixed and cured in a manner which gives it a moderate degree of inherent tackiness to all exposed surfaces of the polyurethane material. The molding and curing process creates a substantially smooth exposed surface, which may contain minor undulations. The polyurethane material is soft, yet resilient, and thus may be easily severed by a user with a knife. Surfaces of the polyurethane material which are exposed when a portion of it is severed can also be inherently tacky. While a process is described above for manufacturing polyurethane having an inherent tackiness, one skilled in the art will appreciate that other materials, such as, for example, vinyls, silicones and rubbers, may also be modified to have an inherent tackiness.

The low-density bonding layer 60 is provided between the bottom shell layer 32 and the adhesive sealing layer 50. The low-density bonding layer 60 has a density that is typically less than 450 kg/m³ (0.26 ounces per cubic inch), preferably from 35 to 173 kg/m³ (0.02 to 0.1 ounces per cubic inch). The low-density bonding layer 60 typically has a weight per area of less than 678 g/m² (20 ounces per square yard), for example, from 34 to 339 g/m² (1 to 10 ounces per square yard). The low-density bonding layer 20 provides secure and permanent attachment between the bottom shell layer 32 and the adhesive sealing layer 50, while maintaining separation between the materials of the adjacent layers 32 and 50. In contrast with an open mesh or permeable screen material that would allow the layers 32 and 50 to contact each other, the low-density bonding layer 60 maintains separation between the layers 32 and 50.

The low-density bonding layer 60 may be non-woven and may comprise entanglement fibers made of polyester, polypropylene, polyethylene propylene), polyvinylchloride, fiberglass, nylon, cotton, urethane and the like. In one embodiment, the low-density bonding layer 60 comprises a base or backing layer from which the entanglement fibers extend on one or both sides of the backing layer. For example, the low-density bonding layer 60 may comprise fleece made of polyester and having a thickness of about 0.1 cm (0.04 inch). The fleece assists in the adhesion of the bottom shell layer 32 and the adhesive sealing layer 50. The low-density bonding layer 60 may also provide puncture resistance.

The low-density bonding layer 60 may be adhered to the underside of the bottom shell layer 32 by any suitable means such as adhesives, co-extrusion, thermal welding, sonic welding, RF welding, or the like. For example, an adhesive such as a pressure sensitive adhesive may be applied directly to the bottom shell layer 32 without the need for an intermediate layer. However, the pressure sensitive adhesive may be the pre-applied to a carrier film (not shown), which is bonded to the bottom shell layer 32, i.e., the carrier film may be used as an intermediate layer. The carrier film may be polyethylene, polypropylene, nylon, polyester or the like, for example, polyethylene having a thickness of from 0.019 to 0.076 mm (0.00075 to 0.003 inches (0.75 to 3 mils)). The carrier layer may be bonded to the bottom shell layer 32 with a polyolefin-based hot melt adhesive, by thermal, sonic or RF welding, or the like.

While the compressible containment walls 16, 116, 216 and 316 are illustrated as having rectangular cross-sections in the figures, any other suitable cross-sectional shape may be used, such as square, triangular, trapezoidal, semi-circular or the like.

The berm device 10 may come in various lengths and shapes, such as straight sections, curved sections, 45° and 90° corner sections, termination ends and freely formable sections, all of which can be fitted and sealed together to form any size or shape fluid containment area that is required. The freely formable sections are laterally flexible enough to permit forming curvilinear shapes as the berm is installed.

The self-adhering capability of the berm device 10 eliminates the need to apply sealing adhesive to the berm before installation and eliminates the need for mechanical fasteners. This results in time savings during installation and a savings on labor to install.

Because of the pliability of the compressible containment walls, the berm device of the present invention can be provided in a kit that includes at least one coil of compressible containment walls, at least four right-angled corner joints, and a sheet of vinyl strapping. In use, the coils of compressible containment walls can be cut with a sharp object such as scissors or a utility knife to a desired length. The corner joints may be set against the cut compressible containment walls to allow for a custom fit of a specific containment area. Once the proper configuration of berm device is achieved, the compressible containment wall sections and corner joints are pressed into place to make proper contact. The strapping material can be cut into desired length to cover any areas that were exposed during cutting of the ends of the compressible containment walls. The strapping material may be applied to the compressible containment walls and corner joints by means of standard strapping glue. The strapping material may also be integrally formed on the end of the compressible containment wall sections, for example, as an overhanging length or flap of the flexible sidewall material and/or top shell layer of the flexible shell. The flap can overlay adjacent compressible containment wall sections and be joined by an appropriate adhesive.

One of the advantages of the present berm device is that the compressible containment wall sections can be cut from a longer strip of material at the work site in order to construct a berm having the desired dimensions. The ability to cut the compressible containment wall sections to size affords an added degree of flexibility, which allows the berm devices of the present invention to be used for any number of configurations.

## Claims

1. A self-adhering compressible containment berm device (10) comprising at least one compressible liquid impermeable containment wall (16; 116; 216; 316) forming a liquid containment perimeter adhered to a containment surface (20), wherein the compressible liquid impermeable containment wall (16; 116; 216; 316) comprises:
a flexible liquid impermeable shell (30) comprising at least one sidewall (33) and a bottom shell layer (32);
a compressible fill material (36) at least partially contained in the flexible liquid impermeable shell (30); and
a pre-applied adhesive layer (40; 50) covering at least a portion of the bottom shell layer (32) structured and arranged to contact the containment surface (20) to thereby adhere and seal the compressible containment wall (16; 116; 216; 316) to the containment surface (20);
**characterized in that** the pre-applied adhesive layer (40; 50) is covered by a release film layer (44) that is removed prior to contacting the pre-applied adhesive layer (40; 50) with the containment surface (20).

2. The self-adhering compressible containment berm device (10) of Claim 1, wherein the pre-applied adhesive layer (40) comprises a pressure sensitive adhesive adapted to be releasably adhered to the containment surface.

3. The self-adhering compressible containment berm device (10) of Claim 1, wherein the pre-applied adhesive layer (50) comprises a pliable, tacky material.

4. The self-adhering compressible containment berm device (10) of Claim 3, further comprising a low-density bonding layer (60) between the pliable, tacky pre-applied adhesive layer (50) and the bottom shell layer (32).

5. The self-adhering compressible containment berm device (10) of Claim 4, wherein the low-density bonding layer (60) comprises a portion of the pliable, tacky material impregnated therein.

6. The self-adhering compressible containment berm device (10) of Claim 5, wherein the pliable, tacky material is impregnated into the low-density bonding layer (60) a distance of from 1 to 50 percent of a thickness of the low-density bonding layer.

7. The self-adhering compressible containment berm device (10) of Claim 1, further comprising at least one extended bottom strip (32a, 32b) extending laterally from the bottom shell layer (32).

8. The self-adhering compressible containment berm device (10) of Claim 7, wherein at least a portion of the adhesive layer is applied to a bottom surface of the at least one extended bottom strip (32a, 32b).

9. The self-adhering compressible containment berm device (10) of Claim 1, wherein the flexible liquid impermeable shell (30) comprises fabric reinforced polyvinyl chloride.

10. The self-adhering compressible containment berm device (10) of Claim 1, wherein the flexible liquid impermeable shell (30) has a thickness of from 0.025 to 12.7 mm (0.001 to 0.5 inch).

11. The self-adhering compressible containment berm device (10) of Claim 1, wherein the compressible fill material (36) comprises open-cell polyurethane foam.

12. The self-adhering compressible containment berm device (10) of Claim 1, wherein the compressible fill material has an expanded height of from 1.27 to 40.64 cm (0.5 to 16 inches).

13. The self-adhering compressible containment berm device (10) of Claim 1, wherein the compressible containment wall (16; 116; 216; 316) has an expanded height of from 1.27 to 45.72 cm (0.5 to 18 inches).

14. The self-adhering compressible containment berm device (10) of Claim 1, wherein the berm device (10) comprises a plurality of the compressible containment walls (16; 116; 216; 316) connected together to form the liquid containment perimeter.

15. A method of assembling a containment berm device (10) on a containment surface (20) comprising connecting multiple compressible liquid impermeable containment walls (16; 116; 216; 316) together to form a liquid containment perimeter adhered to the containment surface (20), wherein each compressible liquid impermeable containment wall (16; 116; 216; 316) comprises:
a flexible liquid impermeable shell (30) comprising at least one sidewall (33) and a bottom shell layer (32);
a compressible fill material (36) at least partially contained in the flexible liquid impermeable shell (30); and
a pre-applied adhesive layer (40; 50) covering at least a portion of the bottom shell layer (32) that contacts the containment surface (20) to thereby adhere and seal the compressible containment wall (16; 116; 216; 316) to the containment surface (20);
**characterized in that** the pre-applied adhesive layer (40; 50) is covered by a release film layer (44) that is removed prior to contacting the pre-applied adhesive layer (40; 50) with the containment surface (20).

## Patentansprüche

1. Selbsthaftende, komprimierbare Eindämmungs-Bermvorrichtung (10), die mindestens eine komprimierbare, flüssigkeitsundurchlässige Eindämmungswand (16; 116; 216; 316) umfasst, die einen Flüssigkeitseindämmungsumfang bildet, der an einer Eindämmungsoberfläche (20) haftet, wobei die komprimierbare, flüssigkeitsundurchlässige Eindämmungswand (16; 116; 216; 316) umfasst:
eine flexible, flüssigkeitsundurchlässige Schale (30), die mindestens eine Seitenwand (33) und eine untere Schalenschicht (32) umfasst;
ein komprimierbares Füllmaterial (36), das zumindest teilweise in der flexiblen, flüssigkeitsundurchlässigen Schale (30) enthalten ist; und
eine vorab aufgebrachte Haftschicht (40; 50), die mindestens einen Abschnitt der unteren Schalenschicht (32) bedeckt, die so strukturiert und angeordnet ist, dass sie mit der Eindämmungsoberfläche (20) in Kontakt kommt, um dadurch die komprimierbare Eindämmungswand (16; 116; 216; 316) an der Eindämmungsoberfläche (20) zu haften und abzudichten;
**dadurch gekennzeichnet, dass** die vorab aufgebrachte Haftschicht (40; 50) von einer Trennfilmschicht (44) bedeckt ist, die entfernt wird, bevor die vorab aufgebrachte Haftschicht (40; 50) mit der Eindämmungsoberfläche (20) in Kontakt gebracht wird.

2. Selbsthaftende komprimierbare Eindämmungs-Bermvorrichtung (10) nach Anspruch 1, wobei die vorab aufgebrachte Haftschicht (40) ein druckempfindliches Haftmittel umfasst, das so ausgelegt ist, dass es lösbar an der Eindämmungsoberfläche haftet.

3. Selbsthaftende komprimierbare Eindämmungs-Bermvorrichtung (10) nach Anspruch 1, wobei die vorab aufgebrachte Haftschicht (50) ein biegsames, klebriges Material umfasst.

4. Selbsthaftende komprimierbare Eindämmungs-Bermvorrichtung (10) nach Anspruch 3, weiter umfassend eine Verbindungsschicht (60) geringer Dichte zwischen der biegsamen, klebrigen, vorab aufgebrachten Haftschicht (50) und der unteren Schalenschicht (32).

5. Selbsthaftende komprimierbare Eindämmungs-Bermvorrichtung (10) nach Anspruch 4, wobei die Verbindungsschicht (60) niedriger Dichte einen Abschnitt des biegsamen, klebrigen Materials darin imprägniert umfasst.

6. Selbsthaftende komprimierbare Eindämmungs-Bermvorrichtung (10) nach Anspruch 5, wobei das biegsame, klebrige Material in die Verbindungsschicht (60) niedriger Dichte in einer Entfernung von 1 bis 50 Prozent einer Dicke der Verbindungsschicht niedriger Dichte imprägniert ist.

7. Selbsthaftende komprimierbare Eindämmungs-Bermvorrichtung (10) nach Anspruch 1, weiter umfassend mindestens einen verlängerten unteren Streifen (32a, 32b), der sich seitlich von der unteren Schalenschicht (32) erstreckt.

8. Selbsthaftende komprimierbare Eindämmungs-Bermvorrichtung (10) nach Anspruch 7, wobei mindestens ein Abschnitt der Haftschicht auf eine untere Oberfläche des mindestens einen verlängerten unteren Streifens (32a, 32b) aufgebracht ist.

9. Selbsthaftende komprimierbare Eindämmungs-Bermvorrichtung (10) nach Anspruch 1, wobei die flexible, flüssigkeitsundurchlässige Schale (30) gewebeverstärktes Polyvinylchlorid umfasst.

10. Selbsthaftende komprimierbare Eindämmungs-Bermvorrichtung (10) nach Anspruch 1, wobei die flexible, flüssigkeitsundurchlässige Schale (30) eine Dicke von 0,025 bis 12,7 mm (0,001 bis 0,5 Zoll) aufweist.

11. Selbsthaftende komprimierbare Eindämmungs-Bermvorrichtung (10) nach Anspruch 1, wobei das komprimierbare Füllmaterial (36) offenzelligen Polyurethanschaum umfasst.

12. Selbsthaftende komprimierbare Eindämmungs-Bermvorrichtung (10) nach Anspruch 1, wobei das komprimierbare Füllmaterial eine expandierte Höhe von 1,27 bis 40,64 cm (0,5 bis 16 Zoll) aufweist.

13. Selbsthaftende komprimierbare Eindämmungs-Bermvorrichtung (10) nach Anspruch 1, wobei die komprimierbare Eindämmungswand (16; 116; 216; 316) eine expandierte Höhe von 1,27 bis 45,72 cm (0,5 bis 18 Zoll) aufweist.

14. Selbsthaftende komprimierbare Eindämmungs-Bermvorrichtung (10) nach Anspruch 1, wobei die Bermvorrichtung (10) eine Vielzahl der komprimierbaren Eindämmungswände (16; 116; 216; 316) umfasst, die miteinander verbunden sind, um den Flüssigkeitseindämmungsumfang zu bilden.

15. Verfahren zum Zusammenbauen einer Eindämmungs-Bermvorrichtung (10) auf einer Eindämmungsoberfläche (20), umfassend das Verbinden mehrerer komprimierbarer, flüssigkeitsundurchlässiger Eindämmungswände (16; 116; 216; 316) miteinander, um einen Flüssigkeitseindämmungsumfang zu bilden, der an der Eindämmungsoberfläche (20) haftet, wobei jede komprimierbare, flüssigkeitsundurchlässige Eindämmungswand (16; 116; 216; 316) umfasst:
eine flexible, flüssigkeitsundurchlässige Schale (30), die mindestens eine Seitenwand (33) und eine untere Schalenschicht (32) umfasst;
ein komprimierbares Füllmaterial (36), das zumindest teilweise in der flexiblen, flüssigkeitsundurchlässigen Schale (30) enthalten ist; und
eine vorab aufgebrachte Haftschicht (40; 50), die mindestens einen Abschnitt der unteren Schalenschicht (32) bedeckt, die mit der Eindämmungsoberfläche (20) in Kontakt kommt, um dadurch die komprimierbare Eindämmungswand (16; 116; 216; 316) an der Eindämmungsoberfläche (20) zu haften und abzudichten;
**dadurch gekennzeichnet, dass** die vorab aufgebrachte Haftschicht (40; 50) von einer Trennfilmschicht (44) bedeckt ist, die entfernt wird, bevor die vorab aufgebrachte Haftschicht (40; 50) mit der Eindämmungsoberfläche (20) in Kontakt gebracht wird.

## Revendications

1. Dispositif de berme de confinement compressible auto-adhésive (10) comprenant au moins une paroi de confinement compressible imperméable aux liquides (16 ; 116 ; 216 ; 316) formant un périmètre de confinement de liquide adhérant à une surface de confinement (20), dans lequel la paroi de confinement compressible imperméable aux liquides (16 ; 116 ; 216 ; 316) comprend :
une coque souple imperméable aux liquides (30) comprenant au moins une paroi latérale (33) et une couche de coque inférieure (32) ;
un matériau de remplissage compressible (36) contenu au moins partiellement dans la coque souple imperméable aux liquides (30) ; et
une couche adhésive pré-appliquée (40 ; 50) recouvrant au moins une partie de la couche de coque inférieure (32) structurée et agencée pour entrer en contact avec la surface de confinement (20) pour ainsi adhérer et sceller la paroi de confinement compressible (16 ; 116 ; 216 316) à la surface de confinement (20) ;
**caractérisé en ce que** la couche adhésive pré-appliquée (40 ; 50) est recouverte d'une couche de film détachable (44) qui est retirée avant la mise en contact de la couche adhésive pré-appliquée (40 ; 50) avec la surface de confinement (20).

2. Dispositif de berme de confinement compressible auto-adhésive (10) selon la revendication 1, dans lequel la couche adhésive pré-appliquée (40) comprend un adhésif sensible à la pression adapté pour être collé de manière amovible à la surface de confinement.

3. Dispositif de berme de confinement compressible auto-adhésive (10) selon la revendication 1, dans lequel la couche adhésive pré-appliquée (50) comprend un matériau collant et souple.

4. Dispositif de berme de confinement compressible auto-adhésive (10) selon la revendication 3, comprenant en outre une couche de liaison à faible densité (60) entre la couche adhésive pré-appliquée souple et collante (50) et la couche de coque inférieure (32).

5. Dispositif de berme de confinement compressible auto-adhésive (10) selon la revendication 4, dans lequel la couche de liaison à faible densité (60) comprend une partie du matériau collant et souple qui y est imprégnée.

6. Dispositif de berme de confinement compressible auto-adhésive (10) selon la revendication 5, dans lequel le matériau souple et collant est imprégné dans la couche de liaison à faible densité (60) sur une distance de 1 à 50 % de l'épaisseur de la couche de liaison à faible densité.

7. Dispositif de berme de confinement compressible auto-adhésive (10) selon la revendication 1, comprenant en outre au moins une bande inférieure étendue (32a, 32b) s'étendant latéralement à partir de la couche de coque inférieure (32).

8. Dispositif de berme de confinement compressible auto-adhésive (10) selon la revendication 7, dans lequel au moins une partie de la couche adhésive est appliquée sur une surface inférieure de la au moins une bande inférieure étendue (32a, 32b).

9. Dispositif de berme de confinement compressible auto-adhésive (10) selon la revendication 1, dans lequel la coque flexible imperméable aux liquides (30) comprend du chlorure de polyvinyle renforcé de tissu.

10. Dispositif de berme de confinement compressible auto-adhésive (10) selon la revendication 1, dans lequel la coque flexible imperméable aux liquides (30) présente une épaisseur de 0,025 à 12,7 mm (0,001 à 0,5 pouce).

11. Dispositif de berme de confinement compressible auto-adhésive (10) selon la revendication 1, dans lequel le matériau de remplissage compressible (36) comprend une mousse de polyuréthane à cellules ouvertes.

12. Dispositif de berme de confinement compressible auto-adhésive (10) selon la revendication 1, dans lequel le matériau de remplissage compressible présente une hauteur expansée de 1,27 à 40,64 cm (0,5 à 16 pouces).

13. Dispositif de berme de confinement compressible auto-adhésive (10) selon la revendication 1, dans lequel la paroi de confinement compressible (16 ; 116 ; 216 ; 316) présente une hauteur expansée de 1,27 à 45,72 cm (0,5 à 18 pouces).

14. Dispositif de berme de confinement compressible auto-adhésive (10) selon la revendication 1, dans lequel le dispositif de berme (10) comprend une pluralité de parois de confinement compressibles (16 ; 116 ; 216 ; 316) connectées ensemble pour former le périmètre de confinement de liquide.

15. Procédé d'assemblage d'un dispositif de berme de confinement (10) sur une surface de confinement (20) comprenant la connexion de multiples parois de confinement compressibles imperméables aux liquides (16 ; 116 ; 216 ; 316) pour former ensemble un périmètre de confinement de liquide adhérant à la surface de confinement (20) , dans lequel chaque paroi de confinement compressible imperméable aux liquides (16 ; 116 ; 216 ; 316) comprend :
une coque souple imperméable aux liquides (30) comprenant au moins une paroi latérale (33) et une couche de coque inférieure (32) ;
un matériau de remplissage compressible (36) contenu au moins partiellement dans la coque souple imperméable aux liquides (30) ; et
une couche adhésive pré-appliquée (40 ; 50) recouvrant au moins une partie de la couche de coque inférieure (32) qui entre en contact avec la surface de confinement (20) pour ainsi adhérer et sceller la paroi de confinement compressible (16 ; 116 ; 216 ; 316) à la surface de confinement (20) ;
**caractérisé en ce que** la couche adhésive pré-appliquée (40 ; 50) est recouverte d'une couche de film détachable (44) qui est retirée avant la mise en contact de la couche adhésive pré-appliquée (40 ; 50) avec la surface de confinement (20).
